(19) Europäisches Patentamt
European Patent Office
Office européen des brevets

(11) Publication number: 0 184 427 B1

(12) EUROPEAN PATENT SPECIFICATION

(45) Date of publication of patent specification: 22.08.90

(51) Int. Cl.$^5$: C 01 B 3/00, B 01 J 20/06

(21) Application number: 85308794.8

(22) Date of filing: 03.12.85

# (54) Composition for reversably absorbing and desorbing hydrogen.

(30) Priority: 04.12.84 JP 256126/84

(43) Date of publication of application: 11.06.86 Bulletin 86/24

(45) Publication of the grant of the patent: 22.08.90 Bulletin 90/34

(84) Designated Contracting States: DE FR GB IT

(56) References cited:
US-A-3 720 751
US-A-4 358 429
US-A-4 360 445

(73) Proprietor: SUZUKI SHOKAN CO. LTD.
No. 1 Koujimachi 3-chome Chiyoda-ku
Tokyo 102 (JP)

(72) Inventor: Suzuki, Jo
c/o SUZUKI SHOKAN CO. LTD No. 1 Koujimachi 3-chome
Chiyoda-ku Tokyo 102 (JP)
Inventor: Abe, Masaaki
c/o SUZUKI SHOKAN CO. LTD No. 1 Koujimachi 3-chome
Chiyoda-ku Tokyo 102 (JP)
Inventor: Yamaguchi, Tamotu
c/o SUZUKI SHOKAN CO. LTD No. 1 Koujimachi 3-chome
Chiyoda-ku Tokyo 102 (JP)
Inventor: Terazawa, Shotaro
c/o SUZUKI SHOKAN CO. LTD No. 1 Koujimachi 3-chome
Chiyoda-ku Tokyo 102 (JP)

(74) Representative: Crisp, David Norman et al
D. YOUNG & CO. 10 Staple Inn
London, WC1V 7RD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

This invention relates to a composition for reversibly absorbing and desorbing hydrogen and isotopes thereof. In particular, the invention relates to a substance for reversibly absorbing-desorbing hydrogen and isotopes thereof which is easy to hydrogenate and has a high hydrogen absorbing and desorbing rate. The composition may also be used as a 'getter' for other gases.

Hydrogen getting substances, such as Ti, Zr, Hf and the like, showing a hydrogen dissociation pressure lower than atmospheric pressure at a temperature of less than 300°C have been known. However, these metals are generally covered by strong oxides and/or nitride films, so that to obtain a hydrogen-gettable clean active surface, pretreatment is required, for example, by sublimation in a sputtering method, or heat-treatment at a high temperature e.g. 700—1,000°C.

It has been proposed to improve a pretreatment by activation with one or more additional elements to form an alloy, and so control the hydrogen dissociation pressure characteristic or increase the reversible hydrogen absorbing-desorbing rate.

However, Zr-Al, Zr-Ni alloys, for example, require heat-treatment or activation at a high temperature such as 450—750°C. On the other hand a Zr-V alloy can reversibly absorb and desorb hydrogen without an initial activation treatment, but if such an alloy (e.g. Zr-$V_{0.15}$) is exposed to hydrogen gas at a pressure of about 0.5 kg/$cm^2$, a high temperature for initially absorbing hydrogen of about 230°C is required and the absorption rate is slow. Further, the physical properties of the alloys are such that it is difficult to prepare them with a desired size, e.g. by cutting and crushing.

Intermetallic compounds, Zr-V-O and the like, stabilized by oxygen have also been proposed, but these require an activation treatment and the control of sample grain size is difficult because of the hardness of the alloys. It has also been proposed to control hydrogen dissociation pressure, sample grain size and characteristics to gases other than hydrogen, by adding 4th and 5th elements to an alloy stabilized with oxygen and forming an intermetallic compound such as Zr-Ti-V-Fe-O. However, by increasing the kinds of additional elements, it has been difficult to regulate composition of the substance.

We have now found it possible to provide reversibly hydrogen absorbing-desorbing materials showing a hydrogen equilibrium pressure lower than atmospheric pressure with a comparatively high hydrogenation composition at a temperature of less than 300°C, the materials having a low temperature for initially absorbing hydrogen and a sufficiently fast rate of absorbing and desorbing hydrogen. In addition the materials do not require any initial activation treatment. These properties are achieved by dispersing specified amounts of one or more particular race earth oxides into ZrV having a specified composition and forming a complex.

According to the invention, there is provided a composition for reversibly absorbing and desorbing hydrogen comprising a complex formed by dispersing 0.8—20% by weight of one or more oxides of one or more elements selected from La, Ce, Nd, Pr, Sm and Eu, in $ZrV_x$ (wherein x is in the range $0.01 \leqq x \leqq 0.7$).

In the compositions of the invention, the zirconium-vanadium which forms the matrix should have a composition of $ZrV_{0.01-0.7}$.

As the amount of V in the composition of this invention is increased, the hydrogen gas activity increases and the temperature-hydrogen equilibrium pressure-composition characteristics vary. When the V content is lower than the above range, the effect of increasing the hydrogen gas activity is not so conspicuous, so that the desired properties cannot be attained, and a V content exceeding the above range is not preferable because the alloy then has a high hydrogen equilibrium pressure at a comparatively low temperature in comparatively high hydrogenation composition.

The oxides of the elements which may be dispersed in the $ZrV_x$ matrix are one or more oxides selected from La, Ce, Nd, Pr, Sm and Eu oxides, and the amount thereof is 0.8—20% by weight.

The hydrogen gas activity increases as the amount of the rare earth oxide added is increased, while the temperature equilibrium pressure characteristic is scarcely affected. However, when the amount added does not fall within the above range, the effect of increasing activity is not noticeable, and when the amount exceeds the above range, there is no more effect on the activity and the hydrogen absorption amount is only reduced, so that neither cases are preferable.

For consistency, it is preferable that the elements of the oxides are in their most stable oxidation states, that is $La_2O_3$, $CeO_2$, $Nd_2O_3$, $Pr_6O_{11}$, $Sm_2O_{11}$, and $En_2O_3$, but there is no particular reason why oxides of lower, mixed or non-stoichiometric oxidation states cannot be used.

Various methods may be employed to manufacture the composition of the invention. The most preferable method is to prepare highly pure zirconium and highly pure vanadium and a mixture of the one or more rare earth oxides mentioned above (inclusive of Misch metal oxide) to form respective predetermined compositions and to combine them in an inert atmosphere such as argon and the like.

Alternatively, the rare earth oxides are not directly mixed, but rare earth pure metals are mixed and melted in an oxidizing atmosphere, or a small amount of oxide such as of V or Zr is mixed and melted.

In addition, the composition according to the invention may also readily act as a getter for impure gases such as oxygen, nitrogen, carbon monoxide, carbon dioxide, methane, steam and the like other than hydrogen gas. In addition, the substance according to the invention can be easily ground as compared with Zr-V as a matrix, and is generally not too brittle, and has excessive density.

The composition according to the invention does not require any activation treatment whatever the

initial hydrogen content, and the initial hydrogenation rate is large while the reversible absorbing-desorbing rate is advantageously large.

Furthermore, the composition of the invention has various advantages in that it may be readily ground; the temperature condition and the like in initial hydrogenation is optimised almost without changing the temperature-pressure-composition characteristic of the mother alloy in comparison with alloy improvement by conventional 3rd element addition; the reaction rate is increased; and it may be used as a getter for other impure gases.

With these advantages, the reversible hydrogen absorbing-desorbing composition of this invention may be advantageously used for refining and separating hydrogen gas, for hydrogen gas pressure control of vacuum machines and the like, as a hydrogen gas getter, including isotope and non-volatile getter, and the like.

Figures 1 and 2 of the accompanying drawings are characteristic diagrams showing initial activity of compositions according to the present invention, and

Figure 3 is a diagram showing equilibrium hydrogen pressure to temperature characteristics of the composition according to the present invention in case of changing hydrogenation composition.

The invention will be illustrated by referring to examples hereinafter. These examples are described with preferable specified compositions and other conditions, but these examples are for illustration only and the invention is not limited to these examples.

Examples 1—33

In order to form the compositions shown in Table 1, the following were used: Zr metal powder (purity: more than 99.7%); V metal pieces (purity: more than 99.7%); $Ce_2O_3$ (purity: more than 99.0%); $CeO_2$ (purity: more than 99.0%); $Nd_2O_3$(purity: more than 99.0%); $Pr_6O_{11}$ (purity: more than 99.0%); $Sm_2O_3$ (purity: more than 99.0%); $Eu_2O_3$ (purity: more than 99.0%); and a mixed rare earth oxide (consisting of 30 wt% of $La_2O_3$, 50 wt% of $CeO_2$, 15 wt% of $Nd_2O_3$, 4 wt% of $Pr_6O_{11}$ and 1 wt% of $Sm_2O_3$). The desired amounts of the components were arc melted in an argon atmosphere and formed into a reversible hydrogen absorbing-desorbing material.

The thus obtained material was ground to 20—40 mesh, and 4 g were charged in a hydrogen absorbing-desorbing reactor, vacuum exhausted to 1,33 Pa.

Hydrogen having 99.9999% purity was introduced into the reactor at a pressure of about 0.5 kg/cm$^2$, the material temperature was maintained at 30°C for 10 minutes and then the temperature was raised from 30°C to 300°C at a rate of 5°C/min. By measuring the sample temperature and the pressure in the reactor, the temperature and the sample started to absorb hydrogen and the initial hydrogen absorbing rate were determined. Thus, the indices of the hydrogen absorption starting temperature and the absorbing rate at the time of the initial hydrogen absorption are as shown in Table 1. Further, the saturated hydrogen absorbing amount at the temperature of starting absorption of initial hydrogen in each sample (converted into STP) is as shown in Table 1.

Figure 1 is a graph showing the change with time of the hydrogen pressure in a reactor when the materials of Example No. 22 (solid line (I))), Example No. 14 (solid line (II)) and $ZrV_{0.15}$ (solid line (III)) as mother alloy thereof and ground to 20—40 mesh are charged in the above reactor. After vacuum exhaustion of the reactor to 1,33 Pa, a hydrogen pressure of 0.5 kg/cm$^2$ is provided, 30°C is maintained for 10 minutes, and the temperature is raised to 300°C at a rate of 5°C/min.

In Figure 1, the abscissa indicates time, the ordinate indicates the pressure in reactor at that time by a solid line and the temperature in the vicinity of a sample at that time by a one-dot line.

Figure 2 is a graph showing the change with time of hydrogen pressure when testing materials of Example No. 32 (solid line A), Example No. 29 (solid line B), Example No. 22 (solid line C), Example No. 8 (solid line D) and respective mother alloys $ZrV_{0.7}$ (broken line a) and $ZrV_{0.5}$ (broken line b), $ZrV_{0.15}$ (broken line c) and $ZrV_{0.1}$ (broken line d) under the same condition as in the case shown in Figure 1.

In Figure 2, the abscissa indicates time, the ordinate indicates the pressure in a reactor at that time by a solid-broken line, and the sample temperature by one-dot line.

Figure 3 is a graph showing the hydrogen pressure temperature characteristic of a sample measured by grinding the material of Example No. 22 to 20—40 mesh, weighing 4 g into a vacuum measuring hydrogen absorbing-desorbing container, continuously heating and vacuum exhausting the whole container at 250°C for 48 hours with a cryopump, thereafter sealing a sample system from the exhaust system, introducing a predetermined amount of hydrogen gas at a room temperature for absorption by the sample, raising the temperature from room temperature to about 350°C by balancing the hydrogen pressure, and returning to room temperature in the same manner.

In Figure 3, the abscissa indicates the hydrogen pressure in the container charged with the sample, that is, it shows the equilibrium hydrogen pressure of said sample at that temperature, and the ordinate shows the sample temperature at that time (shown by (1000/T (1/k)) and (°C)).

In Figure 3, the solid line shows the time of absorbing hydrogen and the broken line shows the time of desorbing hydrogen, wherein (1) shows that the hydrogen content in the hydrogenated product is 5% of the saturated hydrogen absorbing amount (2) shows 10%, and (3) shows 15%, respectively. Each example extremely quickly absorbs and desorbs hydrogen to reach equilibrium, and shows the hydrogen pressure-temperature characteristic as shown in Figure 3.

Further, in this pressure measurement, the pressure range from $10^{-5}$ to $10^{-2}$ Pa is the partial pressure measurement of hydrogen gas, and the pressure range higher than $10^{-2}$ Pa is the total pressure measurement with the use of an ionizer vacuum meter.

Absorption of $CO\text{-}N_2$

The material of Example No. 2 was ground to 20—40 mesh, 4 g placed in a stainless vacuum measurement hydrogen absorbing-desorbing container (A), while a control container (B) was free of the material. Both (A) and (B) were continuously heated and vacuumed at 150°C for 24 hours with a cryopump and back to a room temperature, sealed from the exhaust system, and the change with time of respective $CO\text{-}N_2$ partial pressures within said containers (A) and (B) determined. At a room temperature of 23°C, the container (A) shows an increase of $CO\text{-}N_2$ component at a rate of $9.6 \cdot 10^{-8}$ Pa l/sec, and the container (B) shows an increase of $CO\text{-}N_2$ at a ratio $2.26 \cdot 10^{-7}$ Pa l/sec. Therefore, even at a room temperature of 23°C, the sample absorbs the $CO\text{-}N_2$ content at an absorbing rate of $12.75 \cdot 10^{-8}$ l/sec. The temperatures of both the containers (A) and (B) was raised from 25°C to 250°C at a rate of 1.5°C/min, and the change with time of the $CO\text{-}N_2$ partial pressure was examined in the same manner as described above.

The container (A) has $2\times10^{-4}$ Pa at a room temperature and a partial pressure of $1.2\times10^{-5}$ Pa at 250°C, and the container (B) has $2\times10^{-4}$ Pa at a room temperature and $2.9\times10^{-2}$ Pa at 250°C. Therefore, it means that said sample absorbs the $CO\text{-}N_2$ component at $1.6 \cdot 10^{-2}$ Pa l/sec during this period. Further, the temperature when the $CO\text{-}N_2$ partial pressure is reduced in the container (A) is about 40°C.

$O_2$ Partial pressure

$O_2$ partial pressure is investigated by leaking a small amount of oxygen into the container in a temperature range from room temperature to 250°C. For said sample (A), $O_2$ partial pressure was reduced to about $1\times10^{-7}$ Pa within one minute.

$ZrV_{0.15}$ $Nd_2O_3$ 10 wt% and $ZrV_{0.15}Pr_6O_{11}$ 10wt% are not shown in Table 1 as examples, but are expected to obtain the same effect as that examples shown in Table 1.

The following materials may also be expected to obtain the same effect as those of examples shown in Table 1.

$ZrV_{0.15}La_2O_3$ p wt%, $CeO_2$ q wt%

$ZrV_{0.15}La_2O_3$ p wt%, $Nd_2O_3$ q wt%

$ZrV_{0.15}La_2O_3$ p wt%. $Pr_6O_{11}$ q wt%

$ZrV_{0.15}CeO_2$ p wt%, $Sm_2O_3$ q wt%

$ZrV_{0.15}CeO_2$ p wt%, $Eu_2O_3$ q wt%

$ZrV_{0.15}Nd_2O_3$ p wt% $Pr_6O_{11}$ q wt%

$ZrV_{0.15}Sm_2O_3$ p wt%, $Eu_2O_3$ q wt%

(In the above materials, $0.8 \leqq p+q \leqq 20$)

$ZrV_{0.15}La_2O_3$ p wt%, $CeO_2$ q wt%

$Sm_2O_3$ r wt%

(In this material, $0.8 \leqq p+q+r \leqq 20$)

$ZrV_{0.15}La_2O_3$ p wt%, $CeO_2$ q wt%

$Sm_2O_3$ r wt%, $Eu_2O_3$ s wt%

(In this material, $0.8 \leqq p+q+r+s \leqq 20$)

$ZrV_{0.15}La_2O_3$ p wt%, $CeO_2$ q wt%

$Nd_2O_3$ r wt%, $Sm_2O_3$ s wt%

$Eu_2O_3$ t wt%

(In this material, $0.8 \leqq p+q+r+s+t \leqq 20$)

TABLE 1

| Example number | Material (substance) composition | Hydrogen absorbing amount (cc/g) | Temperature (°C) | Indices of absorbing rate at the time of initial hydrogen absorption |
|---|---|---|---|---|
| 1 | $ZrV_{0.05}La_2O_3$ 1% by weight | 198 | 260 | less than 0.05 kg/cm$^2$ within 180 min. |
| 2 | $ZrV_{0.05}CeO_2$ 1% by weight | 198 | 260 | " |
| 3 | $ZrV_{0.05}$ mixed rare earth oxide 1% by weight | 194 | 260 | " |
| 4 | $ZrV_{0.05}La_2O_3$ 20% by weight | 165 | 190 | less than 0.05 kg/cm$^2$ within 30 min. |
| 5 | $ZrV_{0.05}CeO_2$ 20% by weight | 164 | 180 | " |
| 6 | $ZrV_{0.05}$ mixed rare earth oxide 20% by weight | 163 | 180 | " |
| 7 | $ZrV_{0.1}La_2O_3$ 20% by weight | 168 | 180 | less than 0.05 kg/cm$^2$ within 25 min. |
| 8 | $ZrV_{0.1}CeO_2$ 20% by weight | 167 | 180 | " |
| 9 | $ZrV_{0.1}$ mixed rare earth oxide 20% by weight | 168 | 180 | " |
| 10 | $ZrV_{0.15}La_2O_3$ 1% by weight | 245 | 200 | less than 0.05 kg/cm$^2$ within 50 min. |
| 11 | $ZrV_{0.15}CeO_2$ 1% by weight | 242 | 190 | " |
| 12 | $ZrV_{0.15}$ mixed rare earth oxide 1% by weight | 241 | 190 | " |
| 13 | $ZrV_{0.15}La_2O_3$ 5% by weight | 239 | 170 | less than 0.05 kg/cm$^2$ within 30 min. |
| 14 | $ZrV_{0.15}CeO_2$ 5% by weight | 236 | 170 | " |
| 15 | $ZrV_{0.15}$ mixed rare earth oxide 5% by weight | 232 | 170 | " |
| 16 | $ZrV_{0.15}La_2O_3$ 10% by weight | 226 | 150 | less than 0.01 kg/cm$^2$ within 5 min. |
| 17 | $ZrV_{0.15}CeO_2$ 10% by weight | 223 | 150 | " |
| 18 | $ZrV_{0.15}Sm_2O_3$ 10% by weight | 218 | 50 | less than 0.01 kg/cm$^2$ within 2 min. |
| 19 | $ZrV_{0.15}Eu_2O_3$ 10% by weight | 216 | 50 | " |
| 20 | $ZrV_{0.15}$ mixed rare earth oxide 10% by weight | 221 | 150 | less than 0.01 kg/cm$^2$ within 5 min. |
| 21 | $ZrV_{0.15}La_2O_3$ 10% by weight | 210 | 140 | " |
| 22 | $ZrV_{0.15}CeO_2$ 10% by weight | 210 | 140 | " |

TABLE 1 (cont.)

| Example number | Material (substance) composition | Hydrogen absorbing amount (cc/g) | Temperature (°C) | Indices of absorbing rate at the time of initial hydrogen absorption |
|---|---|---|---|---|
| 23 | $ZrV_{0.15}Sm_2O_3$ 10% by weight | 196 | room temperature (30) | waiting time to hydrogenation 0 min less than 0.01 $kg/cm^2$ within 1 min. |
| 24 | $ZrV_{0.15}Eu_2O_3$ 10% by weight | 194 | room temperature (30) | " |
| 25 | $ZrV_{0.15}$ mixed rare earth oxide 10% by weight | 207 | 130 | less than 0.01 $kg/cm^2$ within 5 min. |
| 26 | $ZrV_{0.5}La_2O_3$ 20% by weight | 227 | room temperature (30) | waiting time to hydrogenation 0 min less than 0.01 $kg/cm^2$ within 2 min. |
| 27 | $ZrV_{0.5}CeO_2$ 20% by weight | 220 | " | " |
| 28 | $ZrV_{0.5}La_2O_3$ 20% by weight | 227 | room temperature (30) | waiting time to hydrogenation 0 min less than 0.01 $kg/cm^2$ within 2 min. |
| 29 | $ZrV_{0.5}CeO_2$ 20% by weight | 220 | " | " |
| 30 | $ZrV_{0.15}$ mixed rare earth oxide 20% by weight | 220 | " | " |
| 31 | $ZrV_{0.7}La_2O_3$ 20% by weight | 238 | " | waiting time for hydrogenation 0 min less than 0.01 $kg/cm^2$ within 1 min. |
| 32 | $ZrV_{0.7}CeO_2$ 20% by weight | 242 | " | " |
| 33 | $ZrV_{0.7}$ mixed rare earth oxide 20% by weight | 240 | " | " |

**Claims**

1. A composition for reversibly absorbing and desorbing hydrogen comprising a complex formed by dispersing 0.8—20% by weight of one or more oxides of one or more elements selected from La, Ce, Nd, Pr, Sm and Eu, in $ZrV_x$ (wherein x is in the range $0.01 \leqq x \leqq 0.7$).

2. A composition as claimed in Claim 1, wherein the oxide component comprises one or more of $La_2O_3$, $CeO_2$, $Nd_2O_3$, $Pr_6O_{11}$, $Sm_2O_3$ and $Eu_2O_3$.

3. A composition as claimed in either of Claims 1 and 2, wherein the oxide component comprises $La_2O_3$ (p% by weight) and any one of $CeO_2$, $Nd_2O_3$ and $Pr_6O_{11}$ (q% by weight) where $0.8 \leqq p+q \leqq 20$.

4. A composition as claimed in either of Claims 1 and 2, wherein the oxide component comprises $CeO_2$ (p% by weight) and any one of $Sm_2O_3$ and $Eu_2O_3$ (q% by weight) where $0.8 \leqq p+q \leqq 20$.

5. A composition as claimed in either of Claims 1 and 2, wherein the oxide component comprises $Nd_2O_3$ (p% by weight) and $Pr_6O_{11}$ (q% by weight) where $0.8 \leqq p+q \leqq 20$.

6. A composition as claimed in either of Claims 1 and 2, wherein the oxide component comprises $Sm_2O_3$ (p% by weight) and $Eu_2O_3$ (q% by weight) where $0.8 \leqq p+q \leqq 20$.

7. A composition as claimed in either of Claims 1 and 2, wherein the oxide component comprises $La_2O_3$ (p% by weight), $CeO_2$ (q% by weight) and $Sm_2O_3$ (r% by weight), where $0.8 \leqq p+q+r \leqq 20$.

8. A composition as claimed in either of Claims 1 and 2, wherein the oxide component comprises $La_2O_3$ (p% by weight), $CeO_2$ (q% by weight), $Sm_2O_3$ (r% by weight) and $Eu_2O_3$ (s% by weight), where $0.8 \leqq p+q+r+s \leqq 20$.

9. A composition as claimed in either of Claims 1 and 2, wherein the oxide component comprises $La_2O_3$ (p% by weight), $CeO_2$ (q% by weight), $Nd_2O_3$ (r% by weight), $Sm_2O_3$ (s% by weight) and $Eu_2O_3$ (t%, by weight), where $0.8 \leqq p+q+r+s+t \leqq 20$.

10. A method of reducing the hydrogen content of a hydrogen containing atmosphere which comprises contacting said atmosphere with a composition according to any one of the preceding Claims.

11. A method of purifying an impure gas which comprises contacting said gas with a composition according to any one of Claims 1 to 9.

## Patentansprüche

1. Zusammensetzung für die reversible Absorption und Desorption von Wasserstoff, welche einen Komplex aufweist, der durch Dispersion von 0,8 bis 20 Gew.-% von einem oder mehreren Oxiden eines oder mehrerer Elemente gebildet wird, welche ausgewählt werden aus der Gruppe La, Ce, Nd, Pr, Sm und Eu, in $ZrV_x$ (wobei x im Bereich von $0{,}01 \leqq x \leqq 0{,}7$) liegt.

2. Zusammensetzung nach Anspruch 1, wobei die Oxidkomponente ein oder mehr Elemente der Gruppe $La_2O_3$, $CeO_2$, $Nd_2O_3$, $Pr_6O_{11}$, $Sm_2O_3$ und $Eu_2O_3$ aufweist.

3. Zusammensetzung nach einem der Ansprüche 1 oder 2, wobei die Oxidkomponente $La_2O_3$ (p Gew.-%) und irgendeines aus der Gruppe $CeO_2$, $Nd_2O_3$ und $Pr_6O_{11}$ (q Gew.-%) aufweist, wobei $0{,}8 \leqq p+q \leqq 20$ ist.

4. Zusammensetzung nach einem der Ansprüche 1 oder 2, wobei die Oxidkomponente $CeO_2$ (p Gew.-%) und irgendeines aus der Gruppe $Sm_2O_3$ und $Eu_2O_3$ (q Gew.-%) aufweist, wobei $0{,}8 \leqq p+q \leqq 20$ ist.

5. Zusammensetzung nach einem der Ansprüche 1 oder 2, wobei die Oxidkomponente $Nd_2O_3$ (p Gew.-%) und $Pr_6O_{11}$ (q Gew.-%) aufweist, wobei $0{,}8 \leqq p+q \leqq 20$ ist.

6. Zusammensetzung nach einem der Ansprüche 1 oder 2, wobei die Oxidkomponente $Sm_2O_3$ (p Gew.-%) und $Eu_2O_3$ (q Gew.-%) aufweist, wobei $0{,}8 \leqq p+q \leqq 20$ ist.

7. Zusammensetzung nach einem der Ansprüche 1 oder 2, wobei die Oxidkomponente $La_2O_3$ (p Gew.-%), $CeO_2$ (q Gew.-%) und $Sm_2O_3$ (r Gew.-%) aufweist, wobei $0{,}8 \leqq p+q+r \leqq 20$ ist.

8. Zusammensetzung nach einem der Ansprüche 1 oder 2, wobei die Oxidkomponente $La_2O_3$ (p Gew.-%), $CeO_2$ (q Gew.-%), $Sm_2O_3$ (r Gew.-%) und $Eu_2O_3$ (s Gew.-%) aufweist, wobei $0{,}8 \leqq p+q+r+s \leqq 20$ ist.

9. Zusammensetzung nach einem der Ansprüche 1 oder 2, wobei die Oxidkomponente $La_2O_3$ (p Gew.-%), $CeO_2$ (q Gew.-%), $Nd_2O_3$ (r Gew.-%), $Sm_2O_3$ (s Gew.-%) und $Eu_2O_3$ (t Gew.-%) aufweist, wobei $0{,}8 \leqq p+q+r+s+t \leqq 20$ ist.

10. Verfahren zum Reduzieren des Wasserstoffgehaltes einer Wasserstoff enthaltenden Amtosphäre, welches das Inkontaktbringen der Atmosphäre mit einer Zusammensetzung gemäß einem der vorstehenden Ansprüche aufweist.

11. Verfahren zum Reinigen eines verunreinigten Gases, welches das Inkontaktbringen des Gases mit einer Zusammensetzung gemäß einem der Ansprüche 1 bis 9 aufweist.

## Revendications

1. Composition pour l'absorption et la désorption réversibles de l'hydrogène, comprenant un complexe formé par la dispersion de 0,8—20% en poids d'un ou plusieurs oxydes d'un ou plusieurs éléments choisis parmi La, Ce, Nd, Pr, Sm et Eu, dans du $ZrV_x$ (où x est tel que $0{,}01 \leqq x \leqq 0{,}7$).

2. Composition selon la revendication 1, dans laquelle le composant oxyde comprend un ou plusieurs des oxydes $La_2O_3$, $CeO_2$, $Nd_2O_3$, $Pr_6O_{11}$, $Sm_2O_3$ et $Eu_2O_3$.

3. Composition selon l'une ou l'autre des revendications 1 et 2, dans laquelle le composant oxyde comprend du $La_2O_3$ (p% en poids) et l'un quelconque des oxydes $CeO_2$, $Nd_2O_3$ et $Pr_6O_{11}$ (q% en poids), de façon que $0{,}8 \leqq p+q \leqq 20$.

4. Composition selon l'une ou l'autre des revendications 1 et 2, dans laquelle le composant oxyde comprend du $CeO_2$ (p% en poids) et l'un quelconque des oxydes $Sm_2O_3$ et $Eu_2O_3$ (q% en poids), avec $0{,}8 \leqq p+q \leqq 20$.

5. Composition selon l'une ou l'autre des revendications 1 et 2, dans laquelle le composant oxyde comprend du $Nd_2O_3$ (p% en poids) et du $Pr_6O_{11}$ (q% en poids) avec $0{,}8 \leqq p+q \leqq 20$.

6. Composition selon l'une ou l'autre des revendications 1 et 2, dans laquelle le composant oxyde comprend du $Sm_2O_3$ (p% en poids) et du $Eu_2O_3$ (q% en poids), avec $0{,}8 \leqq p+q \leqq 20$.

7. Composition selon l'une ou l'autre des revendications 1 et 2, dans laquelle le composant oxyde comprend du $La_2O_3$ (p% en poids), du $CeO_2$ (q% en poids) et du $Sm_2O_3$ (r% en poids), avec $0{,}8 \leqq p+q+r \leqq 20$.

8. Composition selon l'une ou l'autre des revendications 1 et 2, dans laquelle le composant oxyde

comprend du $La_2O_3$ (p% en poids), du $CeO_2$ (q% en poids), du $Sm_2O_3$ (r% en poids) et du $Eu_2O_3$ (s% en poids), avec $0,8 \leqq p+q+r+s \leqq 20$.

9. Composition selon l'une ou l'autre des revendications 1 et 2, dans laquelle le composant oxyde comprend du $La_2O_3$ (p% en poids), du $CeO_2$ (q% en poids), du $Nd_2O_3$ (r% en poids), du $Sm_2O_3$ (s% en poids) et du $Eu_2O_3$ (t% en poids), avec $0,8 \leqq p+q+r+s+t \leqq 20$.

10. Procédé pour la réduction de l'hydrogène contenu dans une atmosphère contenant de l'hydrogène, qui consiste à mettre en contact ladite atmosphère avec une composition selon l'une quelconque des revendications précédentes.

11. Procédé de purification d'un gaz impur, qui consiste à mettre en contact ledit gaz avec une composition selon l'une quelconque des revendications 1 à 9.

Fig. 1

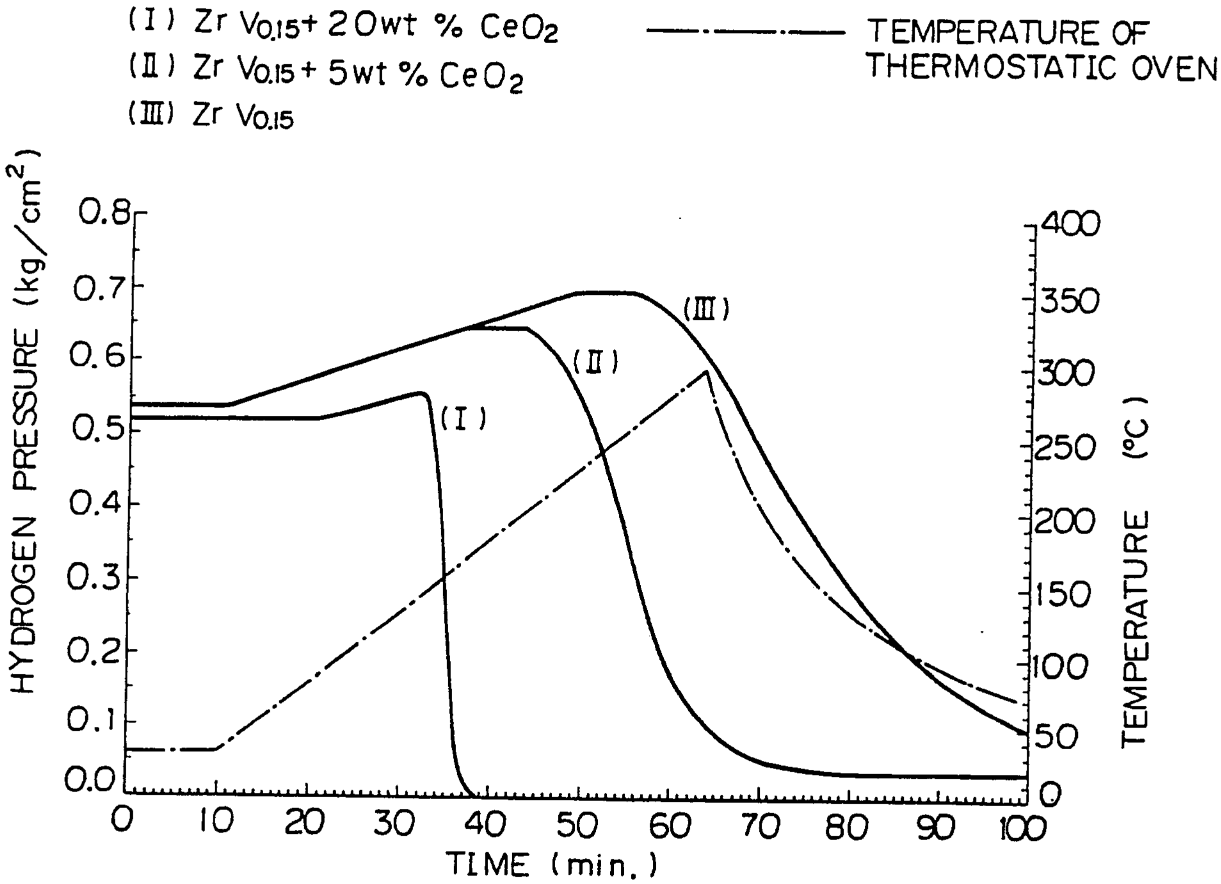
(I) Zr V0.15+ 20wt % CeO2
(II) Zr V0.15 + 5wt % CeO2
(III) Zr V0.15
TEMPERATURE OF THERMOSTATIC OVEN
HYDROGEN PRESSURE (kg/cm2)
0.8
0.7
0.6
0.5
0.4
0.3
0.2
0.1
0.0
400
350
300
250
200
150
100
50
0
TEMPERATURE (°C)
(I)
(II)
(III)
0 10 20 30 40 50 60 70 80 90 100
TIME (min.)

Fig. 2

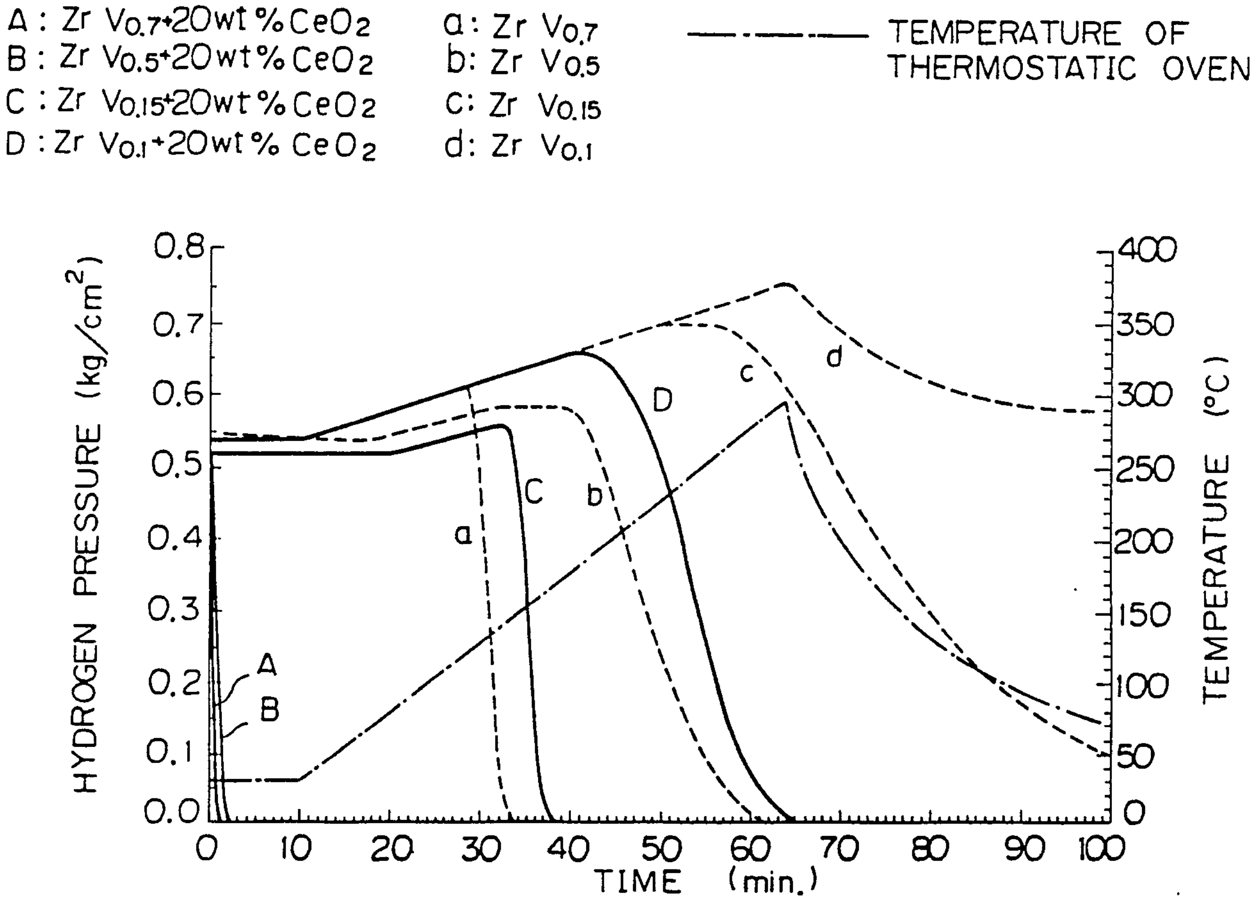
A : Zr V0.7+20wt % CeO2
B : Zr V0.5+20wt % CeO2
C : Zr V0.15+20wt % CeO2
D : Zr V0.1+20wt % CeO2
a : Zr V0.7
b : Zr V0.5
c : Zr V0.15
d : Zr V0.1
TEMPERATURE OF THERMOSTATIC OVEN
HYDROGEN PRESSURE (kg/cm2)
TEMPERATURE (°C)
TIME (min.)
0.0
0.1
0.2
0.3
0.4
0.5
0.6
0.7
0.8
0
50
100
150
200
250
300
350
400
0
10
20
30
40
50
60
70
80
90
100
A
B
C
D
a
b
c
d

*Fig. 3*

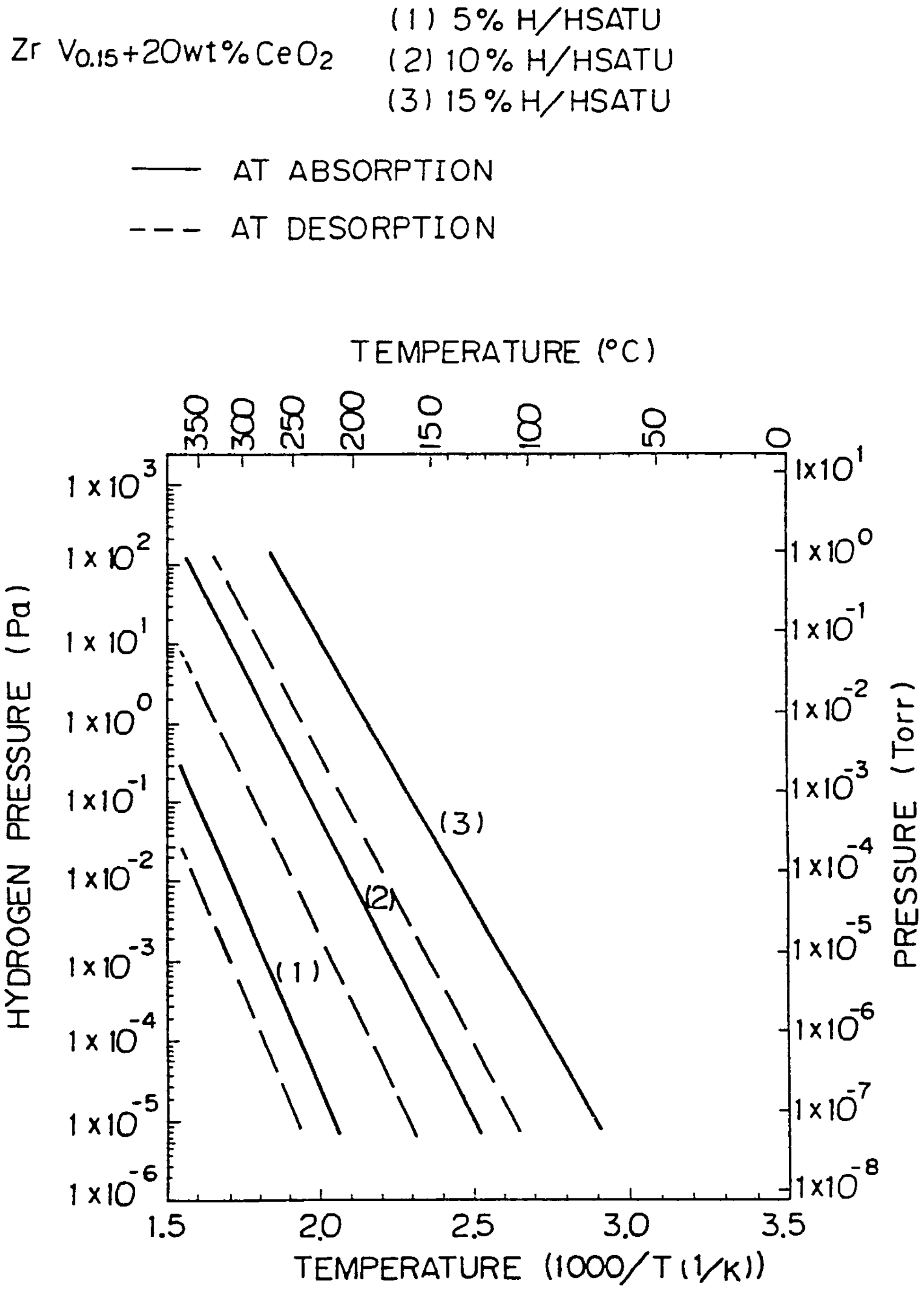

$ZrV_{0.15}$+20wt% $CeO_2$
(1) 5% H/HSATU
(2) 10% H/HSATU
(3) 15% H/HSATU
AT ABSORPTION
AT DESORPTION
TEMPERATURE (°C)
350
300
250
200
150
100
50
0
HYDROGEN PRESSURE (Pa)
$1\times10^{3}$
$1\times10^{2}$
$1\times10^{1}$
$1\times10^{0}$
$1\times10^{-1}$
$1\times10^{-2}$
$1\times10^{-3}$
$1\times10^{-4}$
$1\times10^{-5}$
$1\times10^{-6}$
PRESSURE (Torr)
$1\times10^{1}$
$1\times10^{0}$
$1\times10^{-1}$
$1\times10^{-2}$
$1\times10^{-3}$
$1\times10^{-4}$
$1\times10^{-5}$
$1\times10^{-6}$
$1\times10^{-7}$
$1\times10^{-8}$
(1)
(2)
(3)
1.5
2.0
2.5
3.0
3.5
TEMPERATURE (1000/T (1/K))